# NEUE EUROPÄISCHE PATENTSCHRIFT

(11) **EP 2 574 711 B2**
(45) Veröffentlichungstag und Bekanntmachung des Hinweises auf die Entscheidung über den Einspruch: **12.07.2023**
(45) Hinweis auf die Patenterteilung: 19.07.2017
(21) Anmeldenummer: 12006627.9
(22) Anmeldetag: 25.08.2004
(51) Int. Cl.: F03D 13/20, E04H 12/08, E02D 27/42

(54) **Turm für eine Windenergieanlage**
Tower for a wind energy facility
Tour pour une éolienne

(30) Priorität: 25.08.2003 DE 10339438
(43) Veröffentlichungstag der Anmeldung: 03.04.2013
(62) Teilanmeldung aus: 04764463.8
(73) Patentinhaber: Siemens Gamesa Renewable Energy Service GmbH, 20097 Hamburg (DE)
(72) Erfinder: Weltkamp, Roland, 49090 Osnabrück (DE); Schäfer, Stephan, 32479 Hille (DE); Hinz, Uwe, 25795 Weddingstedt (DE)
(74) Vertreter: Glawe, Delfs, Moll

(56) Entgegenhaltungen:
- WO-A1-02/10589
- WO-A1-02/38890
- WO-A1-03/069099
- BE-A- 451 404
- CH-A- 233 255
- DE-A1- 2 804 711
- DE-A1- 10 061 916
- DE-A1- 10 111 280
- DE-A1- 19 802 210
- DE-B3- 10 230 273
- DE-C- 542 902
- DE-C- 736 454
- DE-U1- 8 704 779
- DE-U1- 9 406 809
- DE-U1- 9 417 738
- DE-U1- 20 109 981
- DE-U1- 29 710 502
- FR-A- 901 698
- FR-A- 921 439
- FR-A- 2 597 161
- GB-A- 2 267 525
- GB-A- 2 366 820
- JP-A- 2002 115 257
- JP-U- S61 200 471
- US-A- 2 705 061
- US-A- 3 638 436
- US-A- 3 685 300
- US-A- 3 895 471
- US-A- 4 403 916
- US-A- 4 516 881
- US-A- 4 519 725
- US-A- 4 543 014
- US-A- 4 621 949
- US-A- 4 646 505
- US-A- 5 356 239
- US-A- 5 669 735
- US-B1- 6 470 645
- MATTHIAS KYNAST ET AL: "BeverWIND: Rettung eines Windrades", WINDBRIEF SÜDWESTFALEN, [Online] Nr. 31, 1. September 2002 (2002-09-01), Seiten 1-15, XP055053652, Gefunden im Internet: URL:http://www.windinvestor.de/pdf/wb31_ne t.pdf> [gefunden am 2013-02-18]
- Pierre-Jean Cavey ET AL: "L'aérogénérateur 800KVA BEST- Romani", , 1. Februar 2013 (2013-02-01), XP055053662, Gefunden im Internet: URL:http://eolienne.cavey.org/fr/index_fr. php [gefunden am 2013-02-18]
- MATTHIAS KYNAST et al.: "BeverWIND: Rettung eines Windrades", Wind- brief Südwestfalen, 1 September 2002 (2002-09-01), pages 1-15,
- Malcolm D.J: "WindPACT Rotor Design Study: Hybrid Tower Design", SUBCONTRACTOR REPORT, April 2004 (2004-04), pages 1-44,
- Mitzlaff, A. et al: Gründungsstrukturen für Offshore-Windenergieanlagen, HANSA
- Standard Baugrunderkundung
- DNV-OS-J101 draft February 2004
- Statement Hans J. Riber, LIC Engineering
- Quast P.: Gruendungen fuer Offshore-Windenergieanlagen, EFUC Konferenz 2003
- Windenergieanlage BEST - Romani (FR)
- Essener Geotechnik-Kolloquim am 10.12.2002, Monopilegruendungen von Offshore.Windenergieanlagen
- Windtech 2001 Konferenz Husum, Windkraft im Meer- Neue Wege in der Offshore-Technik
- L'aerogenerateur 800 KVA BEST - Romani, Nogent-le-Roi
- Wiemann J. et al: Gruendung von Offshore-Windenergieanlagen - Gruendungskonzepte und geotechnische Grundlagen
- Gash, R. et al: Wind power plants, Solarpraxis AG
- NASA Technical Translation of Experimental Aerogenerator Type B.E.S.T.
- Eolienne- Nogent-Le-Roi
- Design of steel structures, Norsok Standard, Rev 1, December 1998
- Practical stress analysis in engineering design, Alexander Blake, Textbook published by Marcel Dekker Inc., 1990
- Structural design of steelwork to EN 1993 and EN 1994
- American Petroleum Institute: Supplement 1 to Recommended Practice for Planning, Designing, and Constructing Fixed Offshore Platforms
- Calculations of force transfer

## Beschreibung

Moderne Windenergieanlagen werden überwiegend mit Rohrtürmen, insbesondere Stahlrohrtürmen gebaut, da diese Schalenbauweise genannte Bauform die einfachste und wirtschaftlichste Turmkonstruaction ist. Bei großen Windenergieanlagen mit mehr als 70m Rotordurchmesser und mehr als 80m Turmhöhe sowie einer Leistung von über 1,5 Megawatt ist der erforderliche Turmdurchmesser im unteren Turmbereich eine entscheidende technische Grenze. Durchmesser von mehr als 4,3 m sind nur schwer transportierbar, da oft die Durchfahrtshöhe unter Brücken keine größeren Abmessungen zulässt. Weiterhin erfordert die Gesamtlänge und die Masse der Türme eine Aufteilung in mehrere Turmsektionen, welche jeweils über eine Ringflanschverbindung miteinander verschraubt werden. Die großen Ringflanschverbindungen stellen bei Türmen für sehr große Windenergieanlage (3-5MW) neben der Transportlogistik einen erheblichen Kostenfaktor dar.

Aufgrund der Transportschwierigkeiten werden deshalb zunehmend Betontürme eingesetzt, die entweder am Aufstellort der Windenergieanlage gefertigt werden oder aus kleinen Einzelteilen bestehen, die miteinander verklebt und verspannt werden. Beide Turmarten sind jedoch in der Herstellung erheblich teurer als Stahlrohrtürme. Aus diesem Grunde werden auch vereinzelt Stahlrohr-/Beton-Hybridtürme gebaut, bei denen der obere Turmteil so weit wie möglich als Stahlrohrturm ausgeführt wird, und nur der untere, einen für den Transport zu großen Durchmesser aufweisende Turmteil, aus Beton gefertigt wird. Bei dieser Bauform hat sich jedoch der Übergang vom Stahl- auf den Betonturm als technisch komplex und kostspielig herausgestellt.

Weiterhin gibt es die als Strommasten weithin bekannten Gittertürme, die bereits für große Windenergieanlage mit bis zu 114m Höhe und 2 Megawatt Leistung eingesetzt werden. Neben dem Vorteil des problemlosen Transportes weisen diese Türme jedoch den entscheidenden Nachteil auf, dass sie eine deutlich größere horizontale Erstreckung aufweisen als ein vergleichbarer Stahlrohr- oder Betonturm, was häufig Probleme mit dem erforderlichen Abstand zwischen Rotorblattspitze und Turm (Blattfreigang) aufwirft. Biegt sich das Rotorblatt bei Sturm stark durch, besteht die Gefahr der für das gesamte Bauwerk sehr gefährlichen Turmberührung.

Andererseits ermöglicht die größere horizontale Erstreckung des Gitterturms einen insgesamt effektiveren Materialeinsatz. Dieser generell von Fachwerckonstruktionen bekannte Vorteil erlaubt eine geringere Gesamtmasse und somit einen geringeren Anschaffungspreis. Dieser wirtschaftliche Vorteil wird jedoch in der Regel durch die Kosten der über die 20 Jahre Lebensdauer durchzuführende Wartung der Gittertürme zunichte gemacht. Beispielsweise müssen die Schraubverbindungen bei den hochdynamisch beanspruchten Türmen der Windenergieanlage periodisch überprüft werden, eine bei Gittertürmen in der großen Höhe gefährliche, zeitaufwendige, und nur von extrem höhentauglichen Spezialisten durchführbare, körperlich anspruchsvolle Tätigkeit.

Aus der DE-PS 736 454 und der DE 198 02 210 A1 ist es bekannt, dass der Turm einen oberen und einen unteren Turmabschnitt aufweisen kann, wobei der untere Turmabschnitt als Gitterturm und der obere Turmabschnitt rohrförmig ausgebildet ist.

Hierbei ergeben sich aber Probleme hinsichtlich des Übergangs von einem Schalenbauwerk (Rohrturm) zu einer Fachwerkkonstruktion (Gitterturm), da dies technisch sehr anspruchsvoll ist Bei existierenden Gittertürmen für Windenergieanlagen wird deshalb in der Regel nur unmittelbar unter der Maschinengondel ein relativ kurzes rohrförmiges Bauteil, der sogenannte "Topf" eingesetzt, welches den Übergang zu der mit einem Ringflansch versehenen Maschinengondel ermöglicht. Dort wird der Übergang im allgemeinen dadurch realisiert, dass die in der Regel vier Eckstiele des Gitterturms mittels Laschenverbindungen direkt außen auf den Topf geschraubt werden. Dieses Konzept ist deshalb möglich, weil der Turm direkt unter der Gondel nur relativ geringen Biegebeanspruchungen unterliegt. Somit muss in diesem Fall im wesentlichen nur der horizontal (für den Turm als Querkraft wirkende) Rotorschub übertragen werden. Weiter unten, wo der Turm vornehmlich durch das von dem Rotorschub über den Hebelarm der Turmlänge wirkende Biegemoment beansprucht wird, ist eine derartige Konstruktion wirtschaftlich nicht möglich. Türme für eine Windenergieanlage gemäß dem Stand der Technik sind auch aus den Dokumenten FR2597161 und BE451404 bekannt. Die Aufgabe der Erfindung ist es daher, eine Turmkonstruktion für große Windenergieanlagen zu ersinnen, welche die Nachteile im Stand der Technik, insbesondere in Hinsicht auf die Transportierbarkeit, die Wirtschaftlichkeit, die Wartung und den Blattfreigang beseitigt
Diese Aufgabe wird durch einen Turm für eine Windenergieanlage mit den Merkmalen des Anspruchs 1 gelöst.

Der erfindungsgemäße Turm besteht, wie aus dem Stand der Technik bekannt, aus einem oberen rohrförmigen Turmabschnitt sowie einem unteren Turmabschnitt, der als Gitterturm mit mindestens drei Eckstielen ausgebildet ist. Beide Turmabschnitte sind in einem Übergangsbereich miteinander verbunden, wobei die Abmessungen des oberen Turmabschnitts im Übergangsbereich deutlich kleiner als die Abmessungen des unteren Turmabschnitt im Übergangsbereich ausgebildet sind.

Erfindungsgemäß ist vorgesehen, dass der obere Turmabschnitt mindestens ein Sechstel des gesamten Turms ausbildet Dies bietet den Vorteil, dass im oberen Bereich des Turmes eine günstige Standardausführung eingesetzt werden kann.

Zudem sind die auftretenden Torsionsbelastungen im oberen Turmabschnitt aufgrund des kleineren Querschnitts deutlich höher als im unteren Turmabschnitt. Da ein Rohrturm eine hohe Torsionsteifigkeit aufweist, können somit die auftretenden Torsionskräfte besser aufgenommen werden, als z. B durch einen Gitterturm.

Wie oben bereits erläutert, stellt der Übergang von dem unteren auf den oberen Turmabschnitt ein Problem dar. Grund ist, dass der Kraftfluß von dem Rohrquerschnitt des oberen Turmabschnitts auf die drei oder z. B. auch vier Eckstiele des unteren Turmabschnitts weitergeführt werden muss. Die einfachste Lösung wäre z. B. eine Platte, an der der obere und der untere Turmabschnitt befestigt werden. Eine solche Platte hätte aber den Nachteil, dass die Platte sehr grosse Abmessungen aufweisen müßte, um den auftretenden Lasten standhalten zu können, wodurch erhebliche Mehrkosten entstehen würden.

Erfindungsgemäß ist zwar auch vorgesehen, dass der Querschnitt des unteren Turmabschnitts unterhalb des Übergangsbereichs größer ist als der Querschnitt des oberen Turmabschnitts wobei jedoch der Übergangsbereich so ausgebildet ist, dass eine kraftflussoptimierte Anpassung des Querschnitts des unteren Turmabschnitts an den Querschnitt des oberen Turmabschnitts erfolgt. Die Erfindung bietet somit den Vorteil, dass ein Übergangsbereich vorgesehen ist, der so ausgebildet ist, dass der Kraftfluß von dem oberen auf den unteren Turmabschnitt optimal geführt wird, so das der gesamte Übergangsbereich nicht überdimensioniert ausgestaltet werden muß.

Die Synergie der oben genannten Merkmale der Erfindung führt zu einem optimal gestalteten Turm. Der erfindungsgemäße Turm weist in seinem oberen Bereich einen Standardturm auf. In dem unteren Turmabschnitt, der z. B. aufgrund seiner Abmessungen nicht mehr als Rohrturm ausgebildet werden kann, da er dann nicht mehr transportierbar ist, weist der erfindungsgemäße Turm eine Gitterturmkonstruktion auf. Das Vorsehen des Gitterturmabschnitts weist zudem bei einer Offshore aufgestellten Windenergieanlage den großen Vorteil auf, das er den Wellenlasten eine geringere Angriffsfläche als ein Rohrturm bietet. Der vorteilhaft angepasste Übergangsbereich führt zu einem Gitterturmabschnitt dessen Eckstiele und Verstrebungen geringere Wanddicken aufweisen, so dass die Masse des Turms und damit verbunden die Kosten für den Turm, der einen erheblichen Kostenfaktor im Bezug auf die gesamte Windenergieanlage darstellt, vorteilhaft reduziert wird.

Jeder Eckstiel kann gegenüber der vertikalen Achse des Turms eine Neigung aufweisen, die so gewählt sein kann, dass sich bei einer gedachten Verlängerung der Eckstiele deren Längsachsen in einem virtuellen Schnittpunkt kreuzen. Es ist vorteilhaft, den Turm der vorliegenden Erfindung so zu gestalten, dass der virtuelle Schnittpunkt der Eckstiele in einem Bereich oberhalb des Übergangsbereichs liegt, der sich von der Gondel aus über ein Drittel der Turmlänge nach oben oder nach unten erstrecken kann, da so die Eckstiele im wesentlichen nur durch Normalkräfte und nicht durch Biegung belastet werden.

Gittertürme weisen in der Regel zwischen den Eckstielen Verstrebungen auf, zur zusätzlichen Aufnahme von auftretenden Kräften. Durch die Anordnung des Schnittpunktes in dem oberen Bereich der Windenergieanlage wird erreicht, dass der Kraftfluß überwiegend durch die Eckstiele erfolgt und der über die Verstrebungen geführte Kraftfluß wesentlich geringer ausfällt. Auf diese Weise werden die auftretenden Lasten in den Streben vorteilhaft minimiert, wodurch die Verstrebungen geringer dimensioniert werden können, also die Wanddicken der Verstrebungen geringer gewählt werden können, wodurch sich wiederum das Schweißnahtvolumen an den Beinanschlüssen vorteilhaft reduziert (Kosteneinsparung).

Gemäß einer vorteilhaften Ausgestaltung der vorliegenden Erfindung ist der Übergangsbereich so ausgebildet, dass sich der Querschnitt des unteren Turmabschnitts auf den Querschnitt des oberen Turmabschnitts verjüngt und zwar besonders vorteilhaft auf einer Länge die mindestens unteren dem halben Rohrturmdurchmesser entspricht.

Gemäß weiterer vorteilhafter Ausgestaltungen der Erfindung wird der Übergangsbereich von einem Übergangsstück gebildet, das so gestaltet ist, das die horizontale Erstreckung im unteren Bereich erheblich größer ist als die Erstrekkung im oberen Bereich. Die somit entstehenden erheblichen Knicke in der Außenkontur des Turms widersprechen eigentlich den gängigen Konstruktionsregeln, da insbesondere bei der Schalenbauweise jegliche Art von Knicke zu Spannungsüberhöhungen führen, die die tragende Struktur schwächen. Mit den in den Unteransprüchen genannten Maßnahmen ist es jedoch möglich, diese unbestreitbar vorhandenen Nachteile der beiden Knickstellen auszumerzen oder die Knickstellen vollständig zu vermeiden, um die Vorteile der erfindungsgemäßen Hybridbauweise ausschöpfen zu können.

Im Stand der Technik sind derartige Knicke bei der Schalenbauweise nur bei sehr kleinen Windenergieanlagen bekannt, bei denen die Spannungsoptimierung noch keine Rolle gespielt hat. Stattdessen stand dort die Fertigungstechnik im Vordergrund, die es so ermöglichte, zwei günstig auf dem Markt verfügbare Rohrdurchmesser auf einfache Art und Weise miteinander zu verbinden. Bei derartig kleinen Maschinen (Leistung unterhalb von 300 kW) wurden teilweise sogar vorhandene kurze Rohrtürme mit Hilfe stark konischer Übergangstücke auf Unterteile aus Rohren mit größerem Durchmesser gestellt.

Bei modernen Windenergieanlagen mit Leistungen größer ein Megawatt sind im Stand der Technik nur Rohrtürme mit leichten Knicken (maximal 5 - 8°) wirtschaftlich, wobei sich der Knick grundsätzlich relativ dicht unter der Maschinengondel befindet. Diese z. B. aus der EP0821161 bekannte, "doppelt konischer Rohrturm" genannte Bauweise, ermöglicht hauptsächlich einen großen Befestigungsflansch an der Verbindungsstelle zur Maschinengondel und dient weiterhin der Anpassung der Eigenfrequenz des Bauteils an die Erfordernisse.

Gemäß einer weiteren vorteilhaften Ausgestaltung der Erfindung ist es von besonderem Vorteil, den Übergang zwischen oberem und unterem Turmabschnitt (ggf. direkt) unterhalb der horizontalen Ebene auszubilden, die von der Rotorblattspitze bei senkrecht nach unten stehendem Rotorblatt definiert wird. Diese Maßnahme ermöglicht alle im Stand der Technik vorhandenen Nachteile auf einfache Art und Weise zu vermeiden.

Im oberen Turmabschnitt wird durch die Ausführung als Rohrturm den Forderungen nach schlanker Bauweise mit unerreichter Wirtschaftlichkeit genüge getan, aber auch die einfache Wartbarkeit mit wettergeschütztem Aufstieg und Arbeitsbereich ist für die große Höhe ein entscheidender Vorteil. Sobald der Rohrturm an seine Transportgrenzen stößt, wird im unteren Turmabschnitt unterhalb der Ebene der Blattspitze der Gitterturm eingesetzt. Dieser kann mit seiner erheblich größeren horizontalen Erstreckung erhebliche Materialeinsparungen und somit eine größere Wirtschaftlichkeit ermöglichen. Das Wartungsproblem ist im unteren Turmteil weniger entscheidend, da im Stand der Technik Hubsteiger verfügbar sind, die die Zugänglichkeit für das Wartungspersonal im unteren Turmbereich auf einfache und vor allem sichere und komfortable Weise ermöglicht.

Ein weiterer Nachteil der Gittertürme, das im Winter bei Vereisung durch die große Oberfläche der Fachwerkkonstruktion erhebliche Zusatzmassen durch Eisansatz berücksichtigt werden müsse, wird stark abgemindert, da die Zusatzmasse jetzt nur noch an dem statisch und dynamisch weit weniger kritischen unteren Tunnteil wirkt.

Aus den genannten Gründen ist es vorteilhaft den Übergangsbereich in einem Abstand von der Rotorachse auszubilden, der das 1,0 - 1,6-fache, insbesondere 1,0 - 1,3-fache des Rotorrradius betragen kann.

Um die Transportierbarkeit des Übergangstück zu ermöglichen, ist es von besonderen Vorteil, den oberen Bereich des Übergangstücks so auszubilden, dass es bei der Montage der Windenergieanlage am Aufstellort mit dem oberen Turmabschnitt, vorzugsweise mittels einer lösbaren Verbindung, verbindbar ist.

Ebenso ist es von besonderem Vorteil, den unteren Bereich des Übergangstücks so auszubilden, dass das Übergangsstück mit jedem Eckstiel des Gitterturms mittels einer vorzugsweise lösbaren Verbindung verbindbar ist.

Weiterhin kann es vorteilhaft sein, zusätzlich zu den Eckstielen auch einige Streben mit dem unteren Bereich des Übergangstücks zu verschrauben.

Die Flanschverbindung zum Rohrturm ist als besonders kritisch einzustufen, wie die Erfahrungen mit Stahlrohr-/Betonhybridtürmen zeigt.

Eine besonders vorteilhafte Ausführungsform der Erfindung sieht es daher vor, dass die lösbare Verbindung zwischen dem oberen Bereich des Übergangsstücks und dem oberen Turmabschnitt einen an dem Übergangsstück als Verbindungsstelle vorzugsweise innenliegenden zweireihigen Schraubenflansch und einen hierzu passenden, an dem oberen Turmabschnitt angeordneten T-Flansch aufweist.

Die Ausstattung dieser Verbindungsstelle mit einem groß dimensionierten zweireihigen Flansch bietet zudem den Vorteil, dass der Flansch gleichzeitig auch als Beulsteife für die in der Knickstelle der Außenkontur auftretende Kraftumlenkung dient Somit wird die durch die Beulgefahr verursachte Spannungsüberhöhung zum großen Teil auf effektive Weise abgebaut

Der untere Bereich des Übergangsstücks wird vorteilhafter Weise so ausgestaltet, dass er Verbindungsstellen für Laschenverbindungen zu den Eckstielen des Gitterturms aufweist.

Da der untere Gitterturm durch den oberen Rohrturm durch eine erhebliche Zusatzmasse belastet wird, ist es von ganz erheblichem Vorteil, die Eckstiele des Gittermasten als Hohlprofile auszuführen, um ein Ausknicken durch die Gewichtslast des Rohrturms zu verhindern.

Das Übergangsstücks wird weiterhin besonders vorteilhaft so ausgebildet, dass die zulässige Transporthöhe durch die Bauhöhe des Übergangsstücks eingehalten wird. Die max. mögliche Transporthöhe aufgrund der begrenzten Durchfahrtshöhe unter Brücken beträgt in Deutschland in der Regel 4,3 m, auf ausgewählten Strecken sind auch 5,5m hohe Güter noch transportierbar.

Ist bei sehr großen Windenergieanlagen (z.B. 3 - 5 MW Leistung) aufgrund der Abmessungen ein Transport des Übergangsstück in einem Stück nicht möglich, sieht eine Ausgestaltung der vorliegenden Erfindung eine Ausführung des Übergangsstücks in mindestens zwei, vorzugsweise an der Verbindungsstelle lösbar miteinander verbundenen Teilstücken als besonders vorteilhaft vor. Die Verbindung kann z.B. vorteilhaft durch Schraubflansche oder Laschenverbindungen erfolgen, aber auch ein Verschweißen der Teilstücke auf der Baustelle kann eine sehr wirtschaftliche Lösung sein, wenn die Verbindungsstellen in wenig beanspruchte Zonen gelegt werden.

Das Übergangsstück kann hierbei besonders vorteilhaft durch eine vertikale Teilungsebene in mindestens zwei Teilstücke geteilt werden. Eine Aufteilung in eine der Anzahl der Eckstiele des Gitterturms entsprechende Zahl von identischen Teilstücken ist aus fertigungstechnischen Gründen als besonders wirtschaftlich anzusehen.

Eine andere vorteilhafte Ausgestaltung der Erfindung sieht eine Teilung des Übergangstücks in mindestens einer horizontalen Teilungsebene vor.

Selbstverständlich können bei besonders großen Windenergieanlage auch beide Teilungsmöglichkeiten miteinander kombiniert werden.

Um die maximal zulässige Transporthöhe möglichst vollständig auszuschöpfen, sieht eine vorteilhafte Ausgestaltung der Erfindung die Ausführung des Übergangstücks oder des Teilstücks des Übergangstücks derart vor, dass es mit Hilfe von Adapterstücken, welche auf die vorhandenen oder eigens hierzu vorgesehenen Verbindungsstellen montiert werden, als Kesselbrücke transportierbar ist.

Je nach Abmessung und Gewicht des Übergangsstücks oder der Teilstücke des Übergangsstücks ist hierbei auch der Transport von mehreren direkt oder indirekt (über Adapterstücke) miteinander verbundene Übergangs- bzw. Teilstücke in einer Kesselbrücke vorgesehen. Dieses bietet beispielsweise die Möglichkeit, die Teilstücke eines in der Bauhöhe zu hohen, zweiteiligen Übergangsstück an den (halben) Ringflanschen miteinander zu verschrauben und dann liegend unter Einhaltung der zulässigen Transporthöhe als Kesselbrücke zu transportieren.

Besonders effizient lässt sich das Übergangsstück nach einer erfindungsgemäßen Ausführungsform gestalten, wenn es eine Wandung aufweist und in Schalenbauweise ausgeführt ist.

Insbesondere ist es von besonderem Vorteil, wenn die Grundform des Übergangstücks im wesentlichen einem stark konischem Rohr entspricht, dessen mittlere Neigung der Wandung zur Mittelachse größer ist als die Neigung der Wandung des unteren Bereichs des Rohrturms und/oder als die Neigung des oberen Bereichs der Eckstiele des Gitterturms.

Die mittlere Neigung ist hierbei definiert als der Winkel zwischen der Vertikalen (oder auch der Mittellinie) und einer gedachten Linie von der maximalen horizontalen Erstreckung im oberen Bereich des Übergangstücks zu der maximalen horizontalen Erstreckung im unteren Bereich.

Um die erfindungsgemäße starke Aufweitung der horizontalen Erstreckung des Turms im Übergangstück in Hinsicht auf den Kraftfluss besonders vorteilhaft zu realisieren, sollte die mittlere Neigung der Wandung des Übergangsstücks zur Mittelachse mindestens 15°, vorzugsweise mehr als 25° aufweisen.

Bei dem konischen Rohr als Grundform des Übergangstücks ist an beliebige Rohrquerschnitte gedacht, also dreieckige, viereckige, vieleckige (z.B. 16eckig) oder auch runde Querschnitte. Weiterhin umfasst die Erfindung ausdrücklich konische Rohre, deren Querschnittsform sich über die Länge ändert.

Eine besonders vorteilhafte Ausgestaltung sieht hierbei vor, dass der Querschnitt des Übergangstücks von einem im wesentlichen runden Querschnitt im oberen Bereich fließend in einen im wesentlichen mehreckigen, vorzugsweise drei- oder viereckig Querschnitt im unteren Bereich übergeht. Im wesentlichen rund kann hierbei auch vieleckig, z.B. 16-eckig bedeuten.

Erfolg die Verbindung zum Rohrturm über einen Ringflansch, so kann über diesen der Übergang von einem beispielsweise 16-eckigen Übergangsstück zum runden Rohrturm ausgeglichen werden.
Wird zumindest der untere Teil des Rohrturms auch als Vieleck ausgeführt, kann die Anbindung auch problemlos über eine Laschenverbindung erfolgen. Bei unterschiedlicher Neigung der Seitenflächen des Übergangsstücks zur Wandung des Rohrturms ist in diesem Fall ggf. noch eine Beulsteife vorzusehen.

Zur Material- und Gewichtseinsparung ist es von besonderem Vorteil, die Wandung des Übergangstücks mit mindestens einer Aussparung zu versehen. Durch geschickt gestaltete Aussparungen ist es insbesondere möglich, den Kraftfluss gegenüber der Version ohne Aussparungen zu verbessern. Dieses gilt insbesondere für torbogenförmige Aussparungen, die sich von Eckstiel zu Eckstiel erstrekken.

Eine weitere Optimierung des Kraftflusses wird durch wulst- oder türzargenförmige Aussteifungen an den Rändern der torbogenförmigen Aussparungen erzielt.

Zur Erhöhung der Steifigkeit des Übergangstücks ist es von Vorteil, wenn im unteren Bereich des Übergangstücks horizontale Träger zwischen den Eckstielen des Gitterturms ausgebildet sind, die die benachbarten Eckstiele und/oder die (diagonal) gegenüberliegenden Eckstiele miteinander verbinden.
Diese horizontalen Träger können einstückig mit dem Übergangsstück verbunden sein, oder auch besonders vorteilhaft über die Laschenverbindung zwischen Übergangsstück und Eckstielen befestigt werden.

Ebenfalls zur Erhöhung der Steifigkeit des Übergangsstücks sieht eine weitere vorteilhafte Ausgestaltung der Erfindung vor, dass bei einer Ausführung mit mindestens vier Eckstielen Rippen ausgebildet sind, die die Verbindungslinien von (diagonal) gegenüberliegenden Eckstielen aussteifen.

In einer besonders vorteilhaften Ausführungsform wird das Übergangstück als Gussbauteil ausgeführt.

Die Gestaltungsfreiheit von Gußbauteilen erlaubt eine Formgebung so, dass durch sanfte, gerundete Übergänge die Spannungsüberhöhungen in den Knickstellen der geschweißten Stahlbauvariante vermieden werden.

Eine besonders kraftflussgerechte Ausführung wird erzielt, wenn die Wandung des Übergangstücks im vertikalen Schnitt betrachtet konvex gekrümmt ist, da so ein besonders weicher Übergang vom Flansch im oberen Bereich zu den Eckstielen im unteren Bereich erzielbar ist.

Insbesondere ist die Neigung der Verbindungsstellen im unteren Bereich des Übergangstücks besonders vorteilhaft so auszubilden, dass sie der Neigung des oberen Bereichs der Eckstiele des Gitterturms entspricht.

Besonders vorteilhaft ist die Gusskonstruktion auch bei mehrteiligen Übergangsstücken mit vertikalen Teilungsebenen, da dann z.B. 4 identischen Gussteilen zu einem Übergangsstück zusammengefügt werden (Stückzahleffekt). Für die Gussvariante bevorzugte Gusswerkstoffe sind beispielsweise Stahlguss oder Kugelgraphit-Guss, beispielsweise GGG40.3.

Wird der erfindungsgemäße Turm in geringer Stückzahl gebaut, ist die Ausführung des Übergangstücks als Schweißkonstruktion von besonderem Vorteil, da die hohen Formbaukosten der Gusskonstruktion entfallen.

Da häufig bei konventionellen Türmen der Übergang zum Betonfundament ebenfalls mit T-Flanschen ausgeführt wird, sieht es eine vorteilhafte Weiterbildung der Erfindung vor, mithilfe des erfindungsgemäßen Hybrid-Konzeptes eine modulare Turmbaureihe zur Verfügung zu stellen, bei der ein existierende Rohrturm (z.B. ein 80m-Turm für eine 1,5 bis 2MW Maschine) mittels des erfindungsgemäßen Übergangstücks auf unterschiedliche, beispielsweise 30, 50 u. 70 m hohe Unterteile in Gitterturmbauweise zu stellen, um so je nach Standort Turmgesamthöhen von 110, 130 u. 150m zu erzielen. Auf diese Weise lassen sich auch bisher unwirtschaftliche Binnenlandstandorte für die wirtschaftliche Windenergienutzung erschließen.

Gemäß einer weiteren vorteilhaften Ausgestaltung der Erfindung weist der als Gitterturm ausgebildete untere Turmabschnitt mehrere übereinander angeordnete Schüsse auf, wobei ein Schuss jeweils die Eckstiele und mindestens eine, diagonal zwischen den Eckstielen verlaufende Verstrebung umfasst.

Gemäß einer weiteren vorteilhaften Ausgestaltung der Erfindung ist vorgesehen, dass die Neigung der diagonal verlaufenden Verstrebungen in allen Schüssen gleich ausgebildet ist, so dass aufgrund der gleichen Neigung der Verstrebungen die Verbindungspunkte zwischen den Beinen und den Verstrebungen gleich ausgebildet sind. Diese Ausgestaltung bietet den Vorteil, dass zur Verbindung der Eckstiele und der Verstrebungen identische Knoten eingesetzt werden können. Auf diese Weise kann vorteilhaft der Aufbau des Turmes optimiert werden. Bislang werden die Eckstiele und die Verstrebungen beim Zusammenbau zueinander angepaßt und dann aufwendig verschweißt.

Im Verhältnis zu geschweißten Knoten können Gußknoten deutlich kompakter und somit wirtschaftlicher ausgeführt werden. Geschweißte Knoten müssen aus Festigkeitsgründen in der Regel so ausgeführt werden, dass sich die Schweißnähte nicht überschneiden. Dies erfordert im Bereich der Rohrübergänge häufig eine Streckung der Knoten, die bei einer Gußausführung nicht erforderlich ist. Zwischen den Knoten können sowohl als Eckstiele als auch als Diagonalstreben zur weiteren Verbesserung der Wirtschaftlichkeit vorzugsweise Standard-Rohrprofile, z.B. aus dem Piplinebau, eingesetzt werden. Der Anschluss kann z.B. über Schraubenflansche oder über Schweißverbindungen erfolgen.

Die Verwendung identischer Knoten bietet den Vorteil, dass die Knoten vorab gefertigt werden können und die Eckstiele und Verstrebungen beim Zusammenbau des Turmes nur in die Knoten eingesetzt und verschweißt bzw. verschraubt werden müssen. Dies stellt eine erhebliche Arbeitserleichterung beim Aufbau des Gitterturms dar. Ausserdem lassen sich durch den Serieneffekt erhebliche Kosteneinsparungen bei der Fertigung der identischen Knoten erzielen.

Insbesondere bei Offshore-Anlagen, die einen Gitterturm aufweisen, müssen bei der für die Verlegung der Kabel zur Netzanbindung zusätzliche Rohre vorgesehen werden. Diese bieten bei Offshore-Anlage eine zusätzliche Angriffsfläche für Wellen wodurch zusätzliche Lasten auf den Gittertrum einwirken. Gemäß einer vorteilhaften Ausgestaltung der Erfindung ist daher vorgesehen, dass die Kabel zur Anbindung der Windenergieanlage an das elektrische Netz in den Eckstielen des Gitterturmabschnitts verlegt sind, wodurch eine Verringerung der Wellenlasten erreicht wird. Gemäß einer weiteren vorteilhaften Ausgestaltung der Erfindung sind innerhalb der Eckstiele Kabelschutzrohre vorverlegt, innerhalb derer die Kabel verlaufen. Diese sind vorteilhaft als Kunststoffrohre ausgeführt, und ermöglichen das einfache Einziehen der Kabel, nachdem der Turm errichtet und auf dem Meeresgrund verankert worden ist.

Weitere Merkmale, Aspekte und Vorteile der Erfindung werden zum Teil durch die nachfolgende Beschreibung offenbart und sind zum Teil durch die Beschreibung nahegelegt oder ergeben sich bei der praktischen Verwendung der Erfindung. Zwei Ausführungsformen der Erfindung werden hinreichend im Detail beschrieben. Es versteht sich, dass andere Ausführungsformen verwendet werden und Änderungen gemacht werden können, ohne den Bereich der Erfindung zu verlassen. Die folgende, ausführliche Beschreibung ist daher nicht in einem beschränkten Sinn zu sehen, insbesondere können auch Details der beiden Ausführungen beliebig ausgetauscht werden.

Die Erfindung soll anhand der nachfolgenden Abbildungen im Detail erläutert werden.

Dabei zeigt:
Fig. 1: Windenergieanlage im Stand der Technik
Fig. 2: Gesamtansicht der erfindungsgemäßen Turmausführung
Fig. 3: Eine Detaildarstellung einer Ausführungsform eines erfindungsgemäßen Übergangsstück
Fig. 4: Eine Detaildarstellung einer weiteren Ausführungsform eines erfindunggemäßen Übergangsstück
Fig. 5: Die Abwicklung der Wandung des Übergangsstücks aus Fig. 4

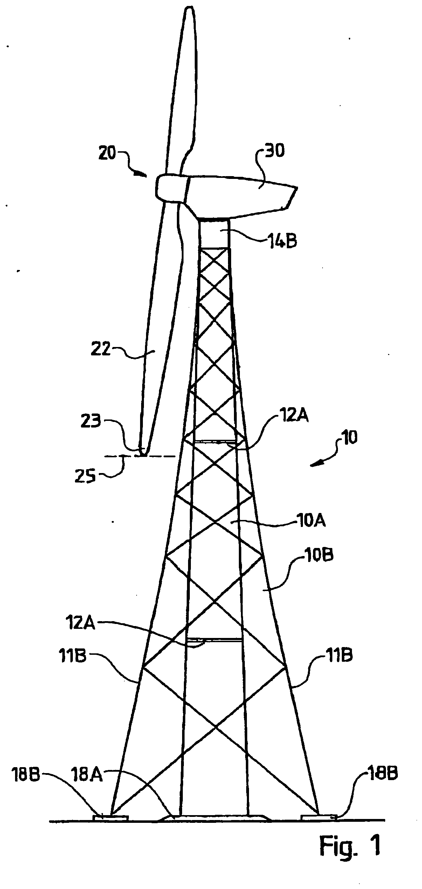

Fig. 1 zeigt die Darstellung einer Windenergieanlage im Stand der Technik, bei der als tragender Turm (10) zwei Turmvarianten, ein Rohrturm (10A) und ein Gitterturm (10B) übereinander projiziert sind. Der Turm (10) trägt eine um die vertikale Turmachse drehbar befestigte Maschinengondel (30), auf welcher ein Rotor (20) mit mindestens einem Rotorblatt (22) mit einer Blattspitze (23) um eine im wesentliche horizontale Achse drehbar gelagert ist. Dargestellt ist hier eine Ausführung als Dreiblattrotor, wobei die horizontale Ebene der Rotorblattspitze (23) in der unteren Position mit einer Strichlinie (25) markiert ist.

Neben der Rotorlagerung enthält die Maschinengondel (30) üblicher Weise einen Generator, ggf. ein Getriebe, ein Windnachführsystem, verschiedene elektrische Komponenten und weitere Hilfssysteme. Diese Elemente sind aus Übersichtlichkeitsgründen nicht dargestellt.

Der Rohrturm (10A) weist aus Transportgründen mehrere Flanschverbindungen 12A auf. Diese Flanschverbindungen werden im Stand der Technik als einseitige, in der Regel nach innen weisende Ringflansche ausgeführt. Nur der unterste Flansch als Übergang zum Fundament (18A) wird im Stand der Technik als T-Flansch (zweireihiger, nach innen und außen weisender Flansch) ausgeführt.

Bei der Ausführungsvariante als Gitterturm (10B) wird der Übergang zum ringförmigen Flansch der Maschinengondel üblicherweise durch ein relativ kurzes, Topf genanntes Übergangstück (14B) realisiert. Der Gitterturm ruht auf in der Regel für jeden Eckstiel (11B) einzeln ausgeführten Fundamenten (18B).

Durch die übereinander projizierten Turmvarianten Rohrturm (10A) und Gitterturm (10B) wird in der Ebene der Rotorblattspitzen (25) sehr deutlich veranschaulicht, dass der Abstand der Blattspitze zum Turm (Blattfreigang) beim Gitterturm (10B) sehr viel geringer und somit kritischer ist als beim Rohrturm (10A).

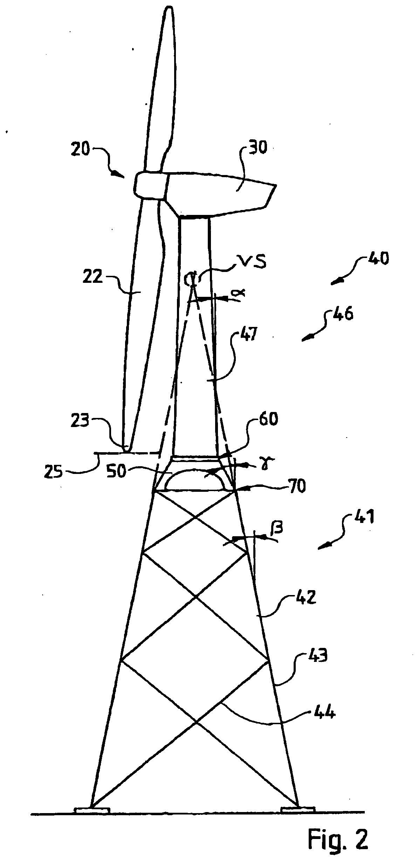

Fig. 2 zeigt die Gesamtansicht einer Windenergieanlage mit einer erfindungsgemäßen Turmausführung. Wie bei Fig. 1 bezeichnet (20) den Rotor und (30) die Maschinengondel. Der Turm (40) besteht im unteren Abschnitt (41) aus einem Gitterturm (42), welcher in der gezeigten Ausführung mit vier Eckstielen (43) und einer Vielzahl von Diagonalstreben (44) ausgestattet ist, und im oberen Abschnitt (46) aus einem im wesentlichen rohrförmigen Rohrturm (47).

Die Verbindung des Gitterturms (42) und des Rohrturms (47) erfolgt in einem Übergangsbereich, der so ausgebildet ist, dass eine kraftflußoptimierte Anpassung des Querschnitts des Gitterturms an den Rohrturm erfolgt. Kraftflussoprimierte Anpassung bezeichnet hierbei eine konstruktive Ausführung, welche entweder durch eine kontinuierliche Geometrieveränderung einen weichen geometrischen Übergang zwischen den unterschiedlichen Querschnittsformen des oberen und unteren Turmabschnitt schafft und somit Spannungsspitzen im Übergangsbereich vermeidet, und/ oder vorhandene Spannungsspitzen im Übergangsbereich durch geeignete Rippen und/oder Streben in die Anschlusskonstruktion ableitet. Voraussetzung für den kraftflussgerechten Übergang ist eine im errichteten Zustand vertikale Länge des Übergangsbereichs von mindestens der Länge des Radius des unteren Rohrturmdurchmessers und/oder der Einsatz von tragenden Elementen (Schalen, Rippen, Streben) die im wesentlichen die Eckstiele des unteren Gittermastes mit der Wandung des oberen Rohrturmes verbinden.

In dem dargestellten Ausführungsbeispiel ist der Übergangsbereich so ausgebildet, dass direkt unter der horizontalen Ebene (25) der Rotorblattspitze (23) ein Übergangsstück (50) angeordnet ist, dessen horizontale Erstreckung im unteren Bereich (70) erheblich (um mehr als 50%) größer ist als im oberen Bereich (60).

Der obere Turmabschnitt (46) weist im unteren Bereich eine (geringe) Neigung der Rohrwandung zur Vertikalen auf, welche mit α bezeichnet ist. Analog ist die Neigung des oberen Bereichs der Eckstiele (43) des Gitterturms (42) im unteren Turmabschnitt (41) mit β bezeichnet.

Für einen optimierten Gitterturmabschnitt weisen die Eckstiele (43) eine Neigung auf, die so gewählt ist, dass die Eckstiele (43) sich, bei einer gedachte Verlängerung der Eckstiele (43) (in der Fig 2 dargestellt durch eine Strichlinie) in einem virtuellen Schnittpunkt VS treffen. Die Lage des virtuellen Schnittpunkts ist in dem dargestellten Ausführungsbeispiel in einem Bereich angeordnet, der sich von der Gondel aus gesehen ein Drittel der Turmlänge nach unten erstreckt. Je nach der Komibnation von Querkraft und Biegemoment im dimensionierenden Belastungsfall kann der optimale virtuelle Schnittpunkt auch oberhalb der Gondel liegen.

Die mittlere Neigung des Übergangstücks (50), welche definiert ist als der Winkel zwischen der Vertikalen und einer gedachten Linie von der maximalen horizontalen Erstreckung im oberen Bereich (60) zu der maximalen horizontalen Erstreckung im unteren Bereich (70), wird mit γ bezeichnet.

In der dargestellten, besonders vorteilhaften Ausführungsform der Erfindung ist γ erheblich größer sowohl als die Neigung (β) des unteren Turmabschnitts (41) als auch die Neigung (α) des oberen Turmabschnitts.

Denkbar wäre aber auch, dass die einzelnen Eckstiele gebogen sind und somit unterschiedliche Neigungen aufweisen, wodurch auch hier eine mittlere Neigung der Eckstiele analog zum Übergangsstück definiert werden kann.

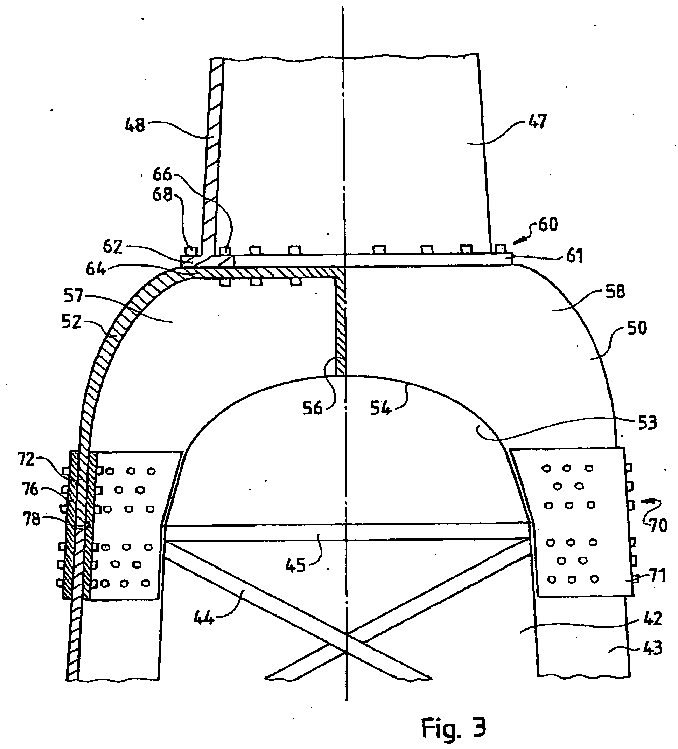

Fig. 3 zeigt eine Detaildarstellung einer möglichen Ausführungsvariante des erfindungsgemäßen Turms mit einem Übergangstück als mehrteilige Gußkonstruktion. Rechts von der Symmetrielinie ist die Seitenansicht dargestellt, links erfolgt die Darstellung im (vertikalen) Schnitt. Der untere Turmabschnitt wird von dem abgeschnitten dargestelltem Gitterturm (42) gebildet, welcher im wesentlichen aus vier Eckstielen (43) und Diagonalstreben (44) besteht Der obere Turmabschnitt wird von dem abgeschnitten dargestellten Bohrturm (47) mit seiner Wandung (48) gebildet.

Eine erfindungsgemäße Ausführung des Übergangsstück (50) ist als Gusskonstruktion in Schalenbauweise mit einer Wandung (52) und torbogenförmigen Aussparungen (53) ausgeführt. Das Übergangsstück ist im oberen Bereich (60) über eine Flanschverbindung (61) mit dem Rohrturm (47) verbunden, und im unteren Bereich (70) über vier Laschenverbindungen (71) mit den Eckstielen (43) des Gitterturms (42).

Im oberen Bereich (60) des Übergangstücks (50) geht die Wandung (52) fließend in einen ringförmigen, zweireihigen Schraubenflansch (64) über. Die Wandung (48) der Rohrturms (47) ist mit einem T-Flansch (62) verschweißt, welcher über einen inneren Schraubenkreis (66) und einen äußeren Schraubenkreis (68) mit dem Flansch (64) des Übergangstücks (50) verschraubt ist. Die innere Verschraubung (66) ist als im Stahlbau übliche Durchsteckverschraubung ausgeführt, die äußere Verschraubung (68) ist im dargestellten Beispiel als Sacklochverschraubung ausgebildet, weil auf diese Weise eine für den Kraftfluß besonders günstige Wanddickenverteilung der Wandung (52) ermöglicht wird. Selbstverständlich kann die Wandung (52) des Übergangstücks (50) auch etwas weiter nach außen herausgezogen werden, so dass auch die äußere Verschraubung (68) als Durchsteckverschraubung ausführbar ist, das Übergangsstück (50) wird dann jedoch etwas schwerer und somit teurer.

Im unteren Bereich (70) geht die Wandung (52) in vier Verbindungsstellen (72) zu den Eckstielen (43) über. Die Verbindung erfolgt als Laschenverbindung (71) über eine äußere Lasche (76) und eine innere Lasche (78), welche mit einer Vielzahl von Schrauben mit der Verbindungsstelle (72) sowie dem Eckstiel (43) verschraubt werden. Da die Neigung der Verbindungsstelle (72) und die Neigung des oberen Bereichs des Eckstiels (41) gleich sind, können ebene Bleche als Verbindungslaschen (76, 78) verwendet werden.

Im Hinblick auf eine Reduzierung der Anzahl der Teile sieht eine weitere Ausführungsform der Erfindung eine direkte Verschraubung der Eckstiele (43) mit den Verbindungsstellen (72) des Übergangstücks (50) vor. In dieser Ausführungsform ist jedoch der Kraftfluß vom Eckstiel (43) in die Wandung (52) des Übergangsstücks (50) etwas ungünstiger.

Zur Aussteifung des unteren Bereichs (70) des Übergangsstücks (50) werden horizontale Träger (45) zwischen den vier Eckstielen (43) befestigt. Diese Träger können wahlweise die benachbarten Eckstiele (43) oder auch die gegenüberliegenden Eckstiele (43), und somit die Diagonalen des Gitterturms (42) miteinander verbinden. Gegebenenfalls können auch beide Möglichkeiten gemeinsam genutzt werden, um eine besonders steife und somit vorteilhafte Konstruktion zu ermöglichen.

Die Anbindung der Diagonalstreben (44) sowie der horizontalen Träger (45) an die Laschenverbindung (71) ist aus Vereinfachungsgründen nicht dargestellt. Derartige Verbindungen sind aber im Stand der Technik, z.B. bei der Verbindung mehrteiliger Eckstiele, hinreichend bekannt.

Bei einem äußeren Durchmesser des T-Flansches (62) des Bohrturms (47) von 4,3 m weist das dargestellte Übergangsstück (50) eine Transporthöhe von ebenfalls etwa 4,3 m bei einer unteren Transportbreite von etwa 7 m auf. Da diese Abmessungen nur eingeschränkt transportierbar sind, sieht eine bevorzugte Ausführungsform der Erfindung eine mehrteilig Ausbildung des Übergangstücks (50) vor. Hierzu ist das Übergangstück (50) durch eine vertikale Teilungsebene in ein linkes Teilstück (57) und ein rechtes Teilstück (58) aufgeteilt. Die Teilstücke (57, 58) werden mit Schraubenflanschen (56) miteinander verschraubt. Alternativ zum Schraubenflansch (56) sieht eine weitere vorteilhafte Weiterbildung der Erfindung Laschenverbindungen zur Verbindung der Teilstücke (57, 58) des Übergangstücks (50) vor.

Durch die Teilung reduzieren sich die Transportabmessungen bei liegendem Transport der beiden Teilstücke (57, 58) auf eine Transporthöhe von etwa 3,5 m bei einer Breite von 4,3 m, womit innerhalb Deutschlands ein problemloser Transport möglich ist.

Eine besonders vorteilhafte Ausbildung der Erfindung sieht auch eine Vierteilung des Übergangstücks symmetrisch zur Mittellinie vor, sodass entweder noch geringere Transportabmessungen erreicht werden können, oder auch noch größere Übergangsstücke gut transportierbar bleiben. Bei erheblich größeren Übergangsstücken ist es erfindungsgemäß vorgesehen, das Übergangstück zusätzlich in einer horizontalen Ebene zu teilen.

Die dargestellte Ausführung des Übergangstücks als Gusskonstruktion hat den Vorteil, dass die Wandung (52) problemlos mit veränderlicher Wandstärke ausgeführt werden kann, wodurch eine sehr effiziente Materialausnutzung ermöglicht wird. Die Bereiche hoher Beanspruchung, wie beispielsweise der konvex gekrümmte Übergang zum Ringflansch (64) oder die als Laschenverbindung (71) ausgebildete Verbindungsstelle (72) zum Eckstiel (43) des Gitterturms (42) können mit größeren Wandstärken ausgeführt werden als Bereiche geringerer Beanspruchung. Ebenso kann die Begrenzung der torbogenförmigen Aussparung (54) mit einer beispielsweise wulstartig ausgeführten Aussteifung versehen sein. Des weiteren ermöglicht die Gusskonstruktion einen für den Kraftfluss optimierten, gleitenden Übergang von dem runden Querschnitt im oberen Bereich (60) des Übergangsstücks (50) zu dem im dargestellten Fall viereckigen Querschnitt im unteren Bereich (70) des Übergangstücks (50).

Insbesondere bei der Offshore-Anwendung des erfindungsgemäßen Turmkonzeptes ist es vorteilhaft, den im Übergangsbereich vorhandenen Raum sinnvoll zu nutzen, indem dort z.B. elektrische Betriebsmittel (Umrichter, Schaltanlagen, Transformator), ein Ersatzteillager (ggf. mit kleiner Werkstatt) oder eine Notunterkunft für Wartungspersonal oder auch ein Besucherraum untergebracht wird. Hierzu kann die vorhandene tragende Struktur durch zusätzliche Wände zu einem geschlossenen Raum ergänzt werden, der natürlich mit den erforderlichen Ein- u. (Not-) Ausgängen, evtl. Fenstern und Klimatisierungssystemen ausgestattet wird. Bei der Installation der elektrischen Betriebsmittel im Übergangsstück sieht eine besonders vorteilhafte Ausführungsform der Erfindung vor, diese Betriebsmittel bereits im Werk zu installieren und zu testen, und das Übergangsstück mit den Einbauten als ein sogenanntes Leistungsmodul zu transportieren und zu installieren.

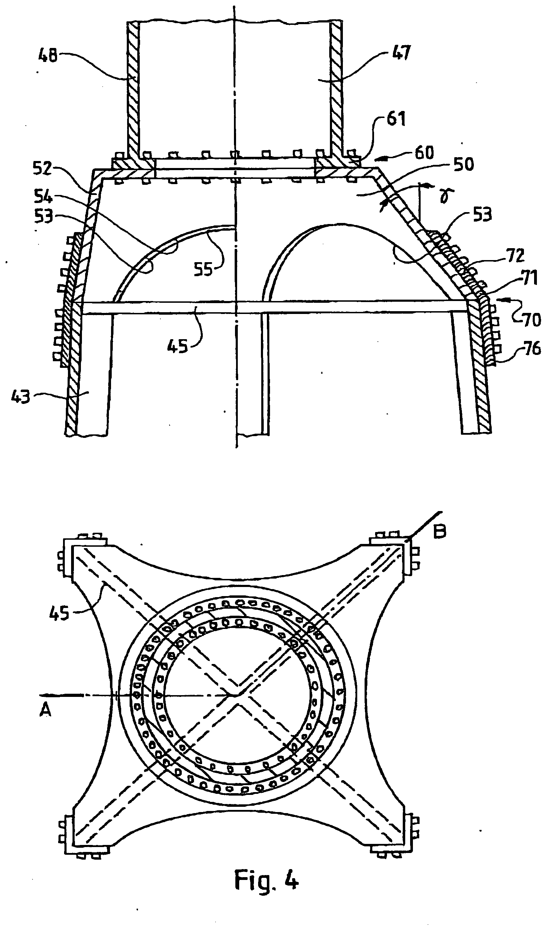

Fig. 4 zeigt die Detaildarstellung einer weiteren erfindungsgemäßen Ausführungsvariante eines Übergangstücks als Schweißkonstruktion. Dargestellt ist im unteren Teil der Fig. 4 eine Aufsicht von oben auf das Übergangsstück (50) sowie im oberen Teil ein vertikaler Schnitt durch das Übergangsstück entlang der Schnittlinie A-B.

Da der grundsätzliche Aufbau sehr ähnlich dem in Fig. 3 dargestellten und ausführlich erläuterten Ausführung ist, wird im wesentlichen nur auf die Unterschiede eingegangen.

Die Wandung (52) des Übergangstücks (50) wird von einem Blech konstanter Dicke gebildet, welches im oberen Bereich eingewalzt wird und im unteren Bereich (70) zur Anpassung an die Geometrie der Eckstiele (43) gekantet wird.
Die mittlere Neigung (γ) des Übergangsstücks (50), welche definiert ist als der Winkel zwischen der Vertikalen und einer gedachten Linie von der maximalen horizontalen Erstreckung im oberen Bereich (60) zu der maximalen horizontalen Erstreckung im unteren Bereich (70) ist erheblich größer als die Neigung der Eckstiele (43) des Gitterturms (42), und natürlich auch größer als die des Rohrturms, da dieser im dargestellten Ausführungsbeispiel zylindrisch ausgebildet ist.

Die Verwendung eines zylindrischen Rohrturms ermöglicht eine kostengünstigere Fertigung und ist nur deshalb möglich, weil der Gitterturm sehr steif ausgeführt ist, und somit die Gesamtkonstruktion auch dann noch ausreichend steif ausführbar ist, wenn auf eine steifigkeitserhöhende Aufweitung des Rohrturms verzichtet wird. Die Verwendung eines zylinderförmigen Rohrturms bietet sich insbesondere dann an, wenn das Azimutlager (drehbare Anordnung der Gondel auf dem Turm) besonders groß gewählt ist, da dann eine hinreichend steife Ausführung des Rohrturms ohne Aufweitung ausführbar ist.

Im Hinblick auf eine einfache Ausführung der Schweißkonstruktion weist die Verbindungsstelle (72) im unteren Bereich (70) des Übergangstücks (50) eine von der Neigung der Eckstiele (43) unterschiedliche Neigung auf. Die Verbindung erfolgt daher über ausreichend stark dimensionierte, gebogene Laschen (76), welche die Umlenkung des Kraftflusses aufnehmen müssen. Die gebogenen Laschen können aus dickem und gegebenenfalls verschweißtem Stahlblech ausgeführt sein, aber eine erfindungsgemäße Weiterbildung sieht auch die Ausführung der Laschen als Gussbauteile vor.

Da die Kraftumlenkung die Laschenverbindungen nach innen (zur Turmachse) verformt, werden stark dimensionierte horizontale Träger (45) diagonal zwischen je zwei einander gegenüberliegende Eckstiele (43) vorgesehen. (Aus Vereinfachungsgründen ist im unteren Zeil der Fig. 4 nur ein derartiger Träger (45) gestrichelt dargestellt.) Durch diese Bauweise lässt sich die Umlenkung des Kraftflusses sicher beherrschen und es ergibt sich eine sehr wirtschaftliche, aber etwas schwerere Konstruktion als bei der Gusskonstruktion.

Ebenso wie bei der Gusskonstruktion sieht eine vorteilhafte Weiterbildung der Erfindung eine Aussteifung der torbogenförmigen Aussparungen (53) vor, die besonders vorteilhaft in Form von einem eingeschweißten Blechstreifen (55) (wie bei einer Türzarge) ausgeführt wird. Die Vorteile der Ausführung als Schweisskonstrulction sind die günstigeren Herstellungskosten bei geringen Stückzahlen und das einfachere Prüfverfahren bei den Baubehörden.

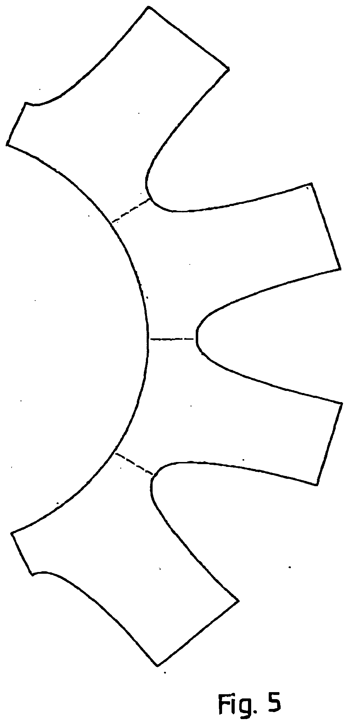

Fig. 5 zeigt die Abwicklung der Wandung des erfindungsgemäßen Übergangstücks aus Fig. 4. Die strukturell sehr günstige Formgebung lässt sich auf sehr einfache Weise durch die aus Stahlblech in einem Stück oder vorzugsweise im dargestellten Fall des Gitterturms mit vier Eckstielen in 4 Stücken (durch gestrichelte Linien angedeutet) ausgebrannten Bleche fertigen. Das oder die Bleche werden hierzu konisch eingewalzt, im Übergangsbereich zu den Eckstielen ist zusätzliches Abkanten von Vorteil, um einen besseren Übergang zu den Eckstielen zu gewährleisten. Stehen keine ausreichend großen Walzmaschinen zur Verfügung, kann auch die im wesentlichen runde Form am Übergang zum oberen Flansch durch eine Vielzahl kleiner Abkantungen erzeugt werden.

## Patentansprüche

1. Turm (40) für eine große Windenergieanlage mit einer Turmhöhe von mehr als 80 m und einer Leistung von über 1,5 MW, die eine auf dem Turm (40) angeordnete Maschinengondel (30) umfasst, wobei die Maschinengondel neben der Rotorlagerung einen Generator, ggf. ein Getriebe, ein Windnachführsystem, verschiedene elektrische Komponenten und weitere Hilfssysteme enthält, und einen an der Maschinengondel um eine im wesentlichen horizontale Achse drehbar gelagerten Rotor (20) mit mehr als 70 m Rotordurchmesser umfasst, der mindestens ein Rotorblatt (22) aufweist, mit einem oberen, rohrförmig ausgebildeten Turmabschnitt (46), der in einem Übergangsbereich mit einem unteren, als Gitterturm (42) ausgebildeten Turmabschnitt (41), verbunden ist, wobei der Gitterturm (42) mindestens drei Eckstiele (43), eine Vielzahl von Diagonalstreben und mehrere übereinander angeordnete Schüsse aufweist, wobei ein Schuss jeweils die Eckstiele (43) und mindestens eine, diagonal zwischen den Eckstielen verlaufende Verstrebung (44) umfasst, wobei der obere Turmabschnitt (46) mindestens ein Sechstel des gesamten Turms bildet, der Querschnitt des unteren Turmabschnitts (41) unterhalb des Übergangsbereich größer ist als der Querschnitt des oberen Turmabschnitts (46), und wobei der Übergangsbereich so ausgebildet ist, dass eine kraftflußoptimierte Anpassung des Querschnitts des unteren Turmabschnitts an den Querschnitt des oberen Turmabschnitts erfolgt, wobei diese kraftflußoptimierte Anpassung entweder durch eine kontinuierliche Geometrieveränderung einen weichen geometrischen Übergang zwischen den unterschiedlichen Querschnittsformen des oberen und unteren Turmabschnitts schafft und somit Spannungsspitzen im Übergangsbereich vermeidet, und/ oder vorhandene Spannungsspitzen im Übergangsbereich durch geeignete Rippen und/oder Streben in die Anschlusskonstruktion ableitet, wobei die vertikale Erstreckung des Übergangsbereichs mindestens die Hälfte des Durchmessers des oberen Turmabschnitts im Übergangsbereich oder unmittelbar daran angrenzend beträgt, wobei der Übergangsbereich unterhalb der horizontalen Ebene (25) angeordnet ist, die im montierten Zustand von der Blattspitze (23) bei senkrecht nach unten stehendem Rotorblatt (22) definiert wird, wobei der Übergangsbereich von einem Übergangsstück (50) gebildet wird, das einen unteren Bereich (70) aufweist, der mit dem unteren Turmabschnitt (41) verbindbar ist und einen oberen Bereich (60), der mit dem oberen Turmabschnitt (46) verbindbar ist.

2. Turm (40) für eine Windenergieanlage nach Anspruch 1, **dadurch gekennzeichnet, dass** der untere Bereich (70) des Übergangsstücks so ausgebildet ist, dass dessen größte horizontale Erstreckung mindestens 30%, vorzugsweise mehr als 50% größer ist als eine horizontale Erstreckung des obere Bereichs (60).

3. Turm (40) für eine Windenergieanlage nach einem der vorstehenden Ansprüche, **dadurch gekennzeichnet, dass** der obere Bereich (60) des Übergangstücks (50) so ausgebildet ist, dass das Übergangsstück (50) mit dem oberen Turmabschnitt (46) mittels einer lösbaren Verbindung (61) verbindbar ist.

4. Turm (40) für eine Windenergieanlage nach einem der vorstehenden Ansprüche, **dadurch gekennzeichnet, dass** das Übergangsstück (50) eine Wandung (52) aufweist und in Schalenbauweise ausgeführt ist.

5. Turm (40) für eine Windenergieanlage nach vorstehendem Anspruch, **dadurch gekennzeichnet, dass** die Grundform des Übergangstücks (50) im wesentlichen einem stark konischem Rohr entspricht, wobei die mittlere Neigung (γ) der Wandung (52) des konischen Rohrs zur Mittelachse größer ist, als die Neigung (α) der Wandung (48) des unteren Bereichs des Rohrturms (47) und/oder als die Neigung (β) des oberen Bereichs der Eckstiele (43) des Gitterturms (42).

6. Turm für eine Windenergieanlage nach vorstehendem Anspruch, **dadurch gekennzeichnet, dass** die Neigung der Verbindungsstellen (72) im unteren Bereich (70) des Übergangstücks (50) der Neigung des oberen Bereichs der Eckstiele (43) des Gitterturms (42) entspricht.

7. Turm (40) für eine Windenergieanlage nach Anspruch 1, **dadurch gekennzeichnet, dass** die Neigung der diagonal verlaufenden Verstrebungen in allen Schüssen gleich ausgebildet ist.

8. Turm (40) für eine Windenergieanlage nach dem vorhergehenden Anspruch, **dadurch gekennzeichnet, dass** der Turm zur Verbindung der Eckstiele (43) und der Verstrebungen (44) identische Knoten aufweist, die insbesondere als Gussknoten ausgebildet sind.

9. Turm (40) für eine Windenergieanlage nach einem der vorhergehenden Ansprüche, **dadurch gekennzeichnet, dass** in dem im Übergangsbereich vorhandenen Raum elektrische Betriebsmittel, ein Ersatzteillager, eine Notunterkunft für Wartungspersonal oder ein Besucherraum angeordnet sind bzw. ist.

10. Turm (40) für eine Windenergieanlage nach dem vorhergehenden Anspruch, **dadurch gekennzeichnet, dass** in dem Übergangstück (50) elektrische Betriebsmittel angeordnet sind, und das Übergangsstück (50) mit den ab Werk installierten und getesteten Betriebsmitteln als transportier- und installierbares Leistungsmodul ausgebildet ist.

11. Turm (40) für eine Windenergieanlage nach Anspruch 1, **dadurch gekennzeichnet, dass** Kabel zur Anbindung der Windenergieanlage an das elektrische Netz in den als Hohlprofil ausgebildeten Eckstielen (43) verlegt sind, und/oder dass innerhalb der Eckstiele (43) Kabelschutzrohre verlegt sind, innerhalb derer die Kabel verlaufen.

12. Turm (40) für eine Windenergieanlage nach einem der vorhergehenden Ansprüche, **dadurch gekennzeichnet, dass** es sich um einen Turm für eine Offshore-Windenergieanlage handelt.

13. Modulares Turmsystem für einen Turm einer Windenergieanlage nach einem der vorstehenden Ansprüche, bestehend aus dem oberen, im wesentlichen rohrförmigen Turmabschnitt und dem unteren Turmabschnitt, wobei der untere Turmabschnitt (41) ausgeführt ist als verschiedene, als Gitterturm ausgeführte untere Turmabschnitte, **dadurch gekennzeichnet, dass** die Turmgesamthöhe durch unterschiedliche Bauhöhen des Gitterturms variabel ausführbar ist.

14. Windenergieanlage mit einem Turm nach einem der Ansprüche 1 bis 12.

## Claims

1. Tower (40) for a large wind turbine which has a tower height of more than 80 m and an output power of over 1.5 MW and comprises a nacelle (30) arranged on the tower (40), wherein the nacelle, in addition to the rotor-bearing arrangement, contains a generator, possibly a gear unit, a wind-tracking system, various electrical components and further auxiliary systems, and the wind turbine also comprises a rotor (20) which is mounted on the nacelle for rotation about an essentially horizontal axis, has a rotor diameter of more than 70 m and has at least one rotor blade (22), the tower having an upper, pipe-form-design tower portion (46), which is connected in a transition region to a lower tower portion (41), which is designed in the form of a lattice tower (42), wherein the lattice tower (42) has at least three corner posts (43), a multiplicity of diagonal struts and a plurality of sections arranged one above the other, wherein each section comprises the corner posts (43) and at least one strut formation (44) running diagonally between the corner posts, wherein the upper tower portion (46) forms at least one sixth of the tower as a whole, the cross section of the lower tower portion (41) beneath the transition region is greater than the cross section of the upper tower portion (46), and wherein the transition region is designed such that the cross section of the lower tower portion is adapted in force-optimized fashion to the cross section of the upper tower portion, wherein said force-optimized adaptation, either by means of a continuous geometrical variation, yields a smooth geometric transition between the different cross-sectional shapes of the upper and lower tower portions, and thus avoids stress peaks in the transition region, and/or dissipates existing stress peaks in the transition region by means of suitable ribs and/or struts into the connecting structure, wherein the vertical extent of the transition region amounts to at least half of the diameter of the upper tower section in the transition region or directly adjacent thereto, wherein the transition region is arranged below the horizontal plane (25) which, in the installed state, is defined by the blade tip (23) in the case of a vertically downwardly pointing rotor blade (22), wherein the transition region is formed by a transition component (50) which has a lower region (70), which can be connected to the lower tower portion (41), and an upper region (60), which can be connected to the upper tower portion (46).

2. Tower (40) for a wind turbine according to Claim 1, **characterized in that** the lower region (70) of the transition component is designed such that the greatest horizontal extent thereof is at least 30%, preferably more than 50%, greater than a horizontal extent of the upper region (60).

3. Tower (40) for a wind turbine according to one of the preceding claims, **characterized in that** the upper region (60) of the transition component (50) is designed such that the transition component (50) can be connected to the upper tower portion (46) by means of a releasable connection (61) .

4. Tower (40) for a wind turbine according to one of the preceding claims, **characterized in that** the transition component (50) has a wall (52) and is configured in the form of a shell construction.

5. Tower (40) for a wind turbine according to the preceding claim, **characterized in that** the basic shape of the transition component (50) corresponds essentially to a pipe with pronounced conicity, wherein the average inclination (γ) of the wall (52) of the conical pipe in relation to the centre axis is greater than the inclination (α) of the wall (48) of the lower region of the pipe tower (47) and/or than the inclination (β) of the upper region of the corner posts (43) of the lattice tower (42).

6. Tower for a wind turbine according to the preceding claim, **characterized in that** the inclination of the connecting locations (72) in the lower region (70) of the transition component (50) corresponds to the inclination of the upper region of the corner posts (43) of the lattice tower (42).

7. Tower (40) for a wind turbine according to Claim 1, **characterized in that** the inclination of the diagonally running strut formations is identical for all the sections.

8. Tower (40) for a wind turbine according to the preceding claim, **characterized in that** the tower has, for connecting the corner posts (43) and the strut formations (44), identical junctions in particular in the form of cast junctions.

9. Tower (40) for a wind turbine according to one of the preceding claims, **characterized in that** electrical operating means, a replacement bearing, emergency accommodation for maintenance personnel or a visitor room are/is arranged in the space present in the transition region.

10. Tower (40) for a wind turbine according to the preceding claim, **characterized in that** electrical operating means are arranged in the transition component (50), and the transition component (50) is formed as a transportable and installable power module with the operating means installed and tested at the factory.

11. Tower (40) for a wind turbine according to Claim 1, **characterized in that** cables for connecting the wind turbine to the electric grid are laid in the corner posts (43), which are designed in the form of hollow profiles, and/or **in that** cable conduits, within which the cables run, are laid within the corner posts (43).

12. Tower (40) for a wind turbine according to one of the preceding claims, **characterized in that** it is a tower for an offshore wind turbine.

13. Modular tower system for a tower of a wind turbine according to one of the preceding claims, consisting of the upper, essentially pipe-form tower portion and the lower tower portion, wherein the lower tower portion (41) is designed in the form of different lower tower portions designed as a lattice tower, **characterized in that** the overall tower height can be varied by means of different structural heights of the lattice tower.

14. Wind turbine having a tower according to one of Claims 1 to 12.

## Revendications

1. Mât (40) pour une grande éolienne ayant une hauteur de mât de plus de 80 m et une puissance supérieure à 1,5 MW, qui comprend une nacelle (30) disposée sur le mât (40), la nacelle contenant, outre le support de rotor, un générateur, éventuellement un engrenage, un système d'orientation, différents composants électriques et d'autres systèmes auxiliaires, et comprenant un rotor (20) supporté en rotation sur la nacelle autour d'un axe essentiellement horizontal avec plus de 70 m de diamètre de rotor, qui présente au moins une pale de rotor (22), avec un tronçon de mât (46) supérieur constitué de façon tubulaire qui est raccordé, dans une zone de transition, à un tronçon de mât (41) inférieur constitué en tant que mât en treillis (42), le mât en treillis (42) présentant au moins trois montants d'angle (43), une multiplicité d'entretoises diagonales et plusieurs segments disposés les uns au-dessus des autres, un segment comprenant respectivement le montant d'angle (43) et au moins un entretoisement (44) s'étendant en diagonale entre les montants d'angle, le tronçon de mât (46) supérieur formant au moins un sixième du mât total, la section transversale du tronçon de mât (41) inférieur au-dessous de la zone de transition étant plus grande que la section transversale du tronçon de mât (46) supérieur, et la zone de transition étant constituée de telle sorte qu'il est effectué une adaptation, optimisée au plan du flux de force, de la section transversale du tronçon de mât inférieur à la section transversale du tronçon de mât supérieur, cette adaptation optimisée au plan du flux de force créant soit par une variation continue de la géométrie une faible transition géométrique entre les différentes formes en section transversale du tronçon de mât supérieur et inférieur et donc évitant des pointes de tension dans la zone de transition, et/soit dérivant des pointes de tension existantes dans la zone de transition par des ailettes et/ou des entretoises appropriées dans la construction de raccordement, l'étendue verticale de la zone de transition représentant au moins la moitié du diamètre du tronçon de mât supérieur dans la zone de transition ou de façon directement adjacente à celle-ci, la zone de transition étant disposée au-dessous du plan horizontal (25) qui est défini dans l'état monté par la pointe de pale (23) quand la pale de rotor (22) est placée verticalement vers le bas, la zone de transition étant formée par une pièce de transition (50) présentant une zone inférieure (70) pouvant être raccordée au tronçon de mât (41) inférieur et une zone supérieure (60) pouvant être raccordée au tronçon de mât (46) supérieur.

2. Mât (40) pour une éolienne selon la revendication 1, **caractérisé en ce que** la zone inférieure (70) de la pièce de transition est constituée de telle sorte que sa plus grande étendue horizontale est supérieure d'au moins 30 %, de préférence de plus de 50 %, à une étendue horizontale de la zone supérieure (60).

3. Mât (40) pour une éolienne selon l'une des revendications précédentes, **caractérisé en ce que** la zone supérieure (60) de la pièce de transition (50) est constituée de telle sorte que la pièce de transition (50) peut être raccordée au tronçon de mât (46) supérieur au moyen d'un raccordement (61) détachable.

4. Mât (40) pour une éolienne selon l'une des revendications précédentes, **caractérisé en ce que** la pièce de transition (50) présente une paroi (52) et est réalisée en construction monocoque.

5. Mât (40) pour une éolienne selon la revendication précédente, **caractérisé en ce que** la forme de base de la pièce de transition (50) correspond essentiellement à un tube fortement conique, l'inclinaison moyenne (γ) de la paroi (52) du tube conique par rapport à l'axe central étant supérieure à l'inclinaison (α) de la paroi (48) de la zone inférieure du mât tubulaire (47) et/ou à l'inclinaison (β) de la zone supérieure des montants d'angle (43) du mât en treillis (42).

6. Mât pour une éolienne selon la revendication précédente, **caractérisé en ce que** l'inclinaison des emplacements de raccordement (72) dans la zone inférieure (70) de la pièce de transition (50) correspond à l'inclinaison de la zone supérieure des montants d'angle (43) du mât en treillis (42) .

7. Mât (40) pour une éolienne selon la revendication 1, **caractérisé en ce que** l'inclinaison des entretoisements s'étendant en diagonale est constituée de façon identique dans tous les segments.

8. Mât (40) pour une éolienne selon la revendication précédente, **caractérisé en ce que** le mât présente, pour le raccordement des montants d'angle (43) et des entretoisements (44), des noeuds identiques qui sont réalisés notamment sous forme de noeuds coulés.

9. Mât (40) pour une éolienne selon l'une quelconque des revendications précédentes, **caractérisé en ce que** dans l'espace existant dans la zone de transition sont disposés des moyens de fonctionnement électriques, un palier partiel de remplacement, un abri d'urgence pour le personnel d'entretien ou une salle des visites.

10. Mât (40) pour une éolienne selon la revendication précédente, **caractérisé en ce que** dans la pièce de transition (50) sont disposés des moyens de fonctionnement électriques et **en ce que** la pièce de transition (50) est réalisée avec les moyens de fonctionnement installés et testés en usine en tant que module de puissance transportable et pouvant être installé.

11. Mât (40) pour une éolienne selon la revendication 1, **caractérisé en ce que** des câbles sont posés dans les montants d'angle (43) constitués en tant que profilé creux pour la connexion de l'éolienne au réseau électrique, et/ou **en ce que**, à l'intérieur des montants d'angle (43), des tubes de protection de câbles sont posés, à l'intérieur desquels passent les câbles.

12. Mât (40) pour une éolienne selon l'une quelconque des revendications précédentes, **caractérisé en ce qu'**il s'agit d'un mât pour une éolienne offshore.

13. Système de mât modulaire pour un mât d'une éolienne selon l'une des revendications précédentes, composé du tronçon de mât supérieur essentiellement de forme tubulaire et du tronçon de mât inférieur, le tronçon de mât (41) inférieur étant réalisé en tant que différents tronçons de mât inférieurs réalisés en tant que mât en treillis, **caractérisé en ce que** la hauteur totale du mât peut être réalisée de façon variable par des hauteurs de construction différentes du mât en treillis.

14. Eolienne avec un mât selon l'une des revendications 1 à 12 précédentes.
